# EUROPÄISCHE PATENTSCHRIFT

(11) **EP 3 627 386 B1**
(45) Veröffentlichungstag und Bekanntmachung des Hinweises auf die Patenterteilung: **07.10.2026**
(21) Anmeldenummer: 19193043.7
(22) Anmeldetag: 22.08.2019
(51) Int. Cl.: G06V 20/58

(54) **VERFAHREN UND VORRICHTUNG ZUM BEREITSTELLEN EINES UMFELDABBILDES EINES UMFELDES EINER MOBILEN EINRICHTUNG UND KRAFTFAHRZEUG MIT EINER SOLCHEN VORRICHTUNG**
METHOD AND DEVICE FOR PROVIDING AN IMAGE OF THE VICINITY OF A MOBILE DEVICE AND MOTOR VEHICLE COMPRISING SUCH A DEVICE
PROCÉDÉ ET DISPOSITIF DE FOURNITURE D'UNE REPRÉSENTATION D'ENVIRONNEMENT D'UN ENVIRONNEMENT D'UN DISPOSITIF MOBILE ET VÉHICULE AUTOMOBILE DOTÉ D'UN TEL DISPOSITIF

(30) Priorität: 21.09.2018 DE 102018216110
(43) Veröffentlichungstag der Anmeldung: 25.03.2020
(73) Patentinhaber: Volkswagen AG, 38440 Wolfsburg (DE)
(72) Erfinder: Günther, Toni, 38116 Braunschweig (DE); Wehner, Robin, 12557 Berlin (DE); Horstmann, Sven, 12163 Berlin (DE); Freter, Sönke, 13347 Berlin (DE); Elliott, Dean, 30169 Hannover (DE)

(56) Entgegenhaltungen:
- DE-A1- 102007 013 023
- DE-A1- 102011 078 615
- DE-A1- 102014 204 309
- ROWAN MCALLISTER ET AL: "Concrete Problems for Autonomous Vehicle Safety: Advantages of Bayesian Deep Learning", PROCEEDINGS OF THE TWENTY-SIXTH INTERNATIONAL JOINT CONFERENCE ON ARTIFICIAL INTELLIGENCE, 1 August 2017 (2017-08-01), California, US, pages 4745 - 4753, XP055664730, ISBN: 978-0-9992411-0-3, DOI: 10.24963/ijcai.2017/661
- DAMEROW FLORIAN ET AL: "Predictive risk maps", 17TH INTERNATIONAL IEEE CONFERENCE ON INTELLIGENT TRANSPORTATION SYSTEMS (ITSC) IEEE, 8 October 2014 (2014-10-08), pages 703 - 710, XP032685729, [retrieved on 20141114], DOI: 10.1109/ITSC.2014.6957772

## Beschreibung

Die Erfindung betrifft ein Verfahren und eine Vorrichtung zum Bereitstellen eines Umfeldabbildes eines Umfeldes einer mobilen Einrichtung. Ferner betrifft die Erfindung ein Kraftfahrzeug umfassend eine solche Vorrichtung.

Moderne Kraftfahrzeuge weisen eine Vielzahl von Assistenzsystemen auf, welche einen Fahrer beim Fahren unterstützen. Beispielsweise kann ein solches Assistenzsystem eine Einparkhilfe, ein Spurhalteassistent oder ein Tempomat sein. Ferner sind Assistenzsysteme bekannt, welche das Fahrzeug halbautomatisiert oder automatisiert fahren können, d.h. sowohl eine Längsregelung als auch eine Querregelung des Kraftfahrzeugs teilweise oder vollständig übernehmen.

Aus der DE 10 2008 036 009 A1 sind ein Verfahren zum Kollisionsschutz eines Kraftfahrzeugs und ein Parkhausassistent bekannt. Insbesondere ist ein Verfahren zum Schutz eines Fahrzeugs vor einer Kollision im Park- und Rangierbereich beschrieben, wobei das Fahrzeug eine Umfeldsensorik zur Detektion von Objekten im Umfeld des Fahrzeugs aufweist. Das Verfahren umfasst die folgenden Schritte: Erfassen der Sensorinformationen der Umfeldsensorik des Fahrzeugs, Erstellen einer Umfeldkarte aus den Sensorinformationen der Umfeldsensorik, Bestimmung der Fahrzeugeigenbewegung, und Bestimmen der Kollisionswahrscheinlichkeit des Fahrzeugs mit in der Umgebung des Fahrzeugs befindlichen Umfeldobjekten auf Grundlage der Umfeldkarte unter Berücksichtigung der Fahrzeugeigenbewegung.

Aus der DE 10 2013 202 463 A1 ist ein Verfahren zum Ermitteln eines Bewegungsmodells eines verletzlichen Verkehrsteilnehmers bekannt. Hierbei wird ermittelt, ob sich ein verletzlicher Verkehrsteilnehmer in einer Umgebung eines Fahrzeugs befindet. Wird ermittelt, dass sich ein verletzlicher Verkehrsteilnehmer in der Umgebung des Fahrzeugs befindet, so wird die Position des verletzlichen Verkehrsteilnehmers ermittelt. Ferner werden Bewegungseinflusskenngrößen ermittelt, die repräsentativ sind für eine vorgegebene Situation und/oder eine vorgegebene Vorrichtung und/oder einen vorgegebenen signifikanten Punkt, die einen Einfluss auf eine Bewegung des detektierten verletzlichen Verkehrsteilnehmers haben können. Abhängig von den ermittelten Bewegungseinflusskenngrößen und der ermittelten Position des verletzlichen Verkehrsteilnehmers wird das Bewegungsmodell des verletzlichen Verkehrsteilnehmers ermittelt, mittels dessen eine prädizierte Position des verletzlichen Verkehrsteilnehmers ermittelbar ist.

Aus der DE 10 2011 078 615 A1 ist eine Objekterfassungsvorrichtung bekannt. In dieser werden ein aufgenommenes Bild einer Szene um ein eigenes Fahrzeug herum, Informationen, die einen Fahrzustand des eigenen Fahrzeugs angeben, und Informationen, die eine Umgebungssituation um das eigene Fahrzeug herum angeben, beschafft; Risikobereiche, in denen jeweils ein Objekt wahrscheinlich existiert, und Bereichsrisikograde der Risikobereiche werden basierend auf den beschafften Informationen geschätzt; Haltungsrisikograde von entsprechenden Haltungen werden basierend auf einer Beziehung zwischen jedem der Risikobereiche und der Haltungen des Objekts, von dem angenommen wird, dass es in dem Risikobereich existiert, geschätzt; ein Fensterbild wird aus einem Suchgebiet in dem aufgenommenen Bild extrahiert, das jedem der Risikogebiete entspricht, gemäß einer absteigenden Reihenfolge von Gesamtrisikograden; und es wird identifiziert, ob das Fensterbild ein Bild ist, das das Objekt zeigt, durch Vergleichen eines Identifikationsmodells mit dem Fensterbild.

Aus der DE 10 2015 206 335 A1 ist ein Verfahren zum Warnen eines Verkehrsteilnehmers und/oder eines Fahrers eines Kraftfahrzeuges bekannt, mit den folgenden Schritte: Fahren mittels eines Kraftfahrzeuges auf einer Fahrbahn; Überwachen eines ersten Bereichs, der sich neben der Fahrbahn befindet und der dazu vorgesehen ist, nicht von einem Kraftfahrzeug befahren zu werden, mittels zumindest eines Sensors, der im oder am Kraftfahrzeug angeordnet ist; Erfassen einer Gefahrenstelle im ersten Bereich; Ermitteln, ob die Gefahrenstelle einen Verkehrsteilnehmer im ersten Bereich veranlassen könnte, sich auf die Fahrbahn zu bewegen, der Verkehrsteilnehmer im ersten Bereich aufgrund der Gefahrenstelle stürzen könnte; und/oder die Gefahrenstelle den Komfort des Verkehrsteilnehmers im ersten Bereich wesentlich beeinträchtigt; und Ermitteln des Ortes und der Art der Gefahrenstelle.

Aus der DE 10 2016 212 700 A1 ist ein Verfahren zur Steuerung eines Fahrzeugs bekannt, aufweisend die Schritte: wenn sich das Fahrzeug einem vorgegebenen Ort nähert, Bereitstellen eines ortsbezogenen Modells, das ein typisches Verhalten eines verletzlichen Verkehrsteilnehmers an dem vorgegebenen Ort abbildet, an eine Steuerungseinheit des Fahrzeugs, Bestimmen eines Kontextes, in dem sich der verletzliche Verkehrsteilnehmer momentan befindet, wobei der Kontext aus Messwerten einer Umfelderfassung bezüglich des verletzlichen Verkehrsteilnehmers gebildet wird, Ermitteln einer Vorhersage des Verhaltens des verletzlichen Verkehrsteilnehmers mit dem ortsbezogenen Modell unter Verwendung des bestimmten Kontextes, und Bestimmen einer Reaktion auf die ermittelte Vorhersage durch die Steuerungseinheit des Fahrzeugs. Ferner sind aus der Druckschrift ein entsprechendes System zum Durchführen des Verfahrens und ein entsprechend ausgestattetes Fahrzeug bekannt.

Aus der DE 10 2008 062 916 A1 ist ein Verfahren zur Ermittlung einer Kollisionswahrscheinlichkeit eines Fahrzeugs mit einem Lebewesen bekannt, bei dem das raumzeitliche Verhalten des Lebewesens mit einem Verhaltensmodell und das raumzeitlche Verhalten des Fahrzeugs mit einem kinematischen Modell modelliert wird und beginnend mit den aktuellen Positionen des Fahrzeugs und des Lebewesens jeweils wenigstens eine Trajektorie bestimmt wird. Hierbei werden ausgehend von den aktuellen Positionen des Lebewesens und des Fahrzeugs eine Trajektorie des Fahrzeugs und des Lebewesens als Trajektorienpaar so lange berechnet, bis entweder das Trajektorienpaar eine Kollision anzeigt oder keine Kollision anzeigt, daraufhin wird die Anzahl der Trajektorienpaare, die eine Kollision anzeigen, ermittelt und hieraus die Kollisionswahrscheinlichkeit als Quotient aus der Anzahl der Trajektorienpaare, die eine Kollision anzeigen, und der gesamten Anzahl der berechneten Trajektorienpaare berechnet.

Aus der DE 10 2014 204 309 A1 ist ein Verfahren zum Betreiben eines Fahrzeugs bekannt, umfassend die folgenden Schritte: Erfassen eines Umfelds des Fahrzeugs, Unterteilen des erfassten Umfelds in Zellen eines Belegungsgitters, wobei relativ zu einer Längsachse des Fahrzeugs die Zellen jeweils zwei gegenüberliegende laterale Grenzen aufweisen, wobei die lateralen Grenzen durch Fahrspurmarkierungen gebildet werden, basierend auf dem erfassten Umfeld Ermitteln eines Belegungswertes derjenigen Zelle, in die das Fahrzeug mittels eines Fahrspurwechsels wechseln will und Durchführen des Fahrspurwechsels abhängig von dem ermittelten Belegungswert. Ferner sind eine entsprechende Vorrichtung sowie ein entsprechendes Computerprogramm beschrieben.

Die DE 10 2007 013 023 A1 beschreibt ein rekursives Verfahren zum Erstellen einer Rasterkarte mit Gitterzellen, denen jeweils ein Gesamtwert einer Wahrscheinlichkeit für eine Besetzung der jeweiligen Gitterzelle durch wenigstens ein Objekt zugeordnet ist, auf der Basis von in aufeinanderfolgenden Messungen mittels wenigstens eines an einem Fahrzeug angeordneten Umfeldsensors erfassten tiefenaufgelösten Bildern zur Detektion von Objekten im Sichtbereich des Umfeldsensors, wobei bei dem Verfahren in jedem Rekursionsschritt aus dem Bild einer aktuellen Messung ein Einzelmessraster mit Gitterzellen, denen jeweils ein aktueller Einzelwert einer Besetzungswahrscheinlichkeit zugeordnet ist, ermittelt wird, welches Einzelmessraster anschließend dazu verwendet wird, unter Anwendung eines Verknüpfungsalgorithmus, insbesondere eines Binary-Bayes-Filters, die jeweils in einem vorhergehenden Rekursionsschritt erstellte Rasterkarte zu aktualisieren, wobei einer freien Gitterzelle des Einzelmessrasters ein aktueller Einzelwert zugewiesen wird, der von der Entfernung der freien Gitterzelle des Einzelmessrasters von dem Umfeldsensor abhängt. Aus R. McAllister et al., Concrete Problems for Autonomous Vehicle Safety: Advantages of Bayesian Deep Learning, Proceedings of the 26th International Joint Conference on Artificial Intelligence, 1. August 2017, Seiten 4745-4753, XP055664730, Kalifornien, USA, DOI: 10.24963/ijacai.2017/661, ISBN: 978-0-9992411-0-3 ist eine Bayessche Deep-Learning-Architektur bekannt, bei der eine Unsicherheit durch das gesamte Modell, umfassend eine Vorhersageschicht und eine Entscheidungsschicht, übertragen wird. Ein weiteres einschlägiges Verfahren ist aus DAMEROW ET AL: "Predictive risk maps", 17TH INTERNATIONAL IEEE CONFERENCE ON INTELLIGENT TRANSPORTATION SYSTEMS (ITSC), 8. Oktober 2014, bekannt.

Um Assistenzfunktionen der eingangs genannten Art bereitstellen zu können, benötigt das Kraftfahrzeug ein möglichst gutes Abbild des Umfeldes. Auf Grundlage eines solchen Umfeldabbildes kann eine Planungseinrichtung anschließend eine zukünftige Trajektorie planen, welche von dem Kraftfahrzeug teilautomatisiert oder automatisiert abgefahren werden kann.

Es ist eine Aufgabe der Erfindung, ein Verfahren und eine Vorrichtung zum Bereitstellen eines Umfeldabbildes eines Umfeldes einer mobilen Einrichtung zu schaffen, bei denen das Umfeldabbild verbessert bereitgestellt werden kann.

Die Aufgabe wird erfindungsgemäß durch ein Verfahren mit den Merkmalen des Patentanspruchs 1 und eine Vorrichtung mit den Merkmalen des Patentanspruchs 9 gelöst. Vorteilhafte Ausgestaltungen der Erfindung ergeben sich aus den Unteransprüchen. Insbesondere wird ein Verfahren zum Bereitstellen eines Umfeldabbildes eines Umfeldes einer mobilen Einrichtung zur Verfügung gestellt, umfassend die folgenden Schritte: Empfangen und/oder Erfassen von Umfelddaten mittels einer Eingangseinrichtung, wobei die Umfelddaten das Umfeld abbilden und Informationen über statische Objekte und/oder dynamische Objekte im Umfeld umfassen, Ausführen der folgenden Schritte für einen aktuellen und für mindestens einen zukünftigen Zeitpunkt mittels einer Schätzeinrichtung:
(a) Schätzen einer Zustandswahrscheinlichkeitsverteilung für mindestens eines der statischen Objekte und/oder dynamischen Objekte auf Grundlage der empfangenen und/oder erfassten Umfelddaten,
(b) Erstellen einer Risikopotentialfeldkarte des Umfeldes auf Grundlage der geschätzten Zustandswahrscheinlichkeitsverteilung des mindestens einen statischen Objektes und/oder dynamischen Objektes, wobei dies unter Berücksichtigung mindestens eines Risikoergänzungspotentials erfolgt,

Zusammenfassen der Risikopotentialfeldkarten des Umfeldes für den aktuellen Zeitpunkt und den mindestens einen zukünftigen Zeitpunkt zu einer Risikopotentialfeldkartensequenz, und Ausgeben der Risikopotentialfeldkartensequenz als Umfeldabbild mittels einer Ausgabeeinrichtung.

Ferner wird eine Vorrichtung zum Bereitstellen eines Umfeldabbildes eines Umfeldes einer mobilen Einrichtung geschaffen, umfassend eine Eingangseinrichtung, wobei die Eingangseinrichtung derart ausgebildet ist, Umfelddaten zu empfangen und/oder zu erfassen, wobei die Umfelddaten das Umfeld abbilden und Informationen über statische Objekte und/oder dynamische Objekte im Umfeld umfassen, eine Schätzeinrichtung, wobei die Schätzeinrichtung derart ausgebildet ist, die folgenden Schritte für einen aktuellen und für mindestens einen zukünftigen Zeitpunkt auszuführen:
(a) Schätzen einer Zustandswahrscheinlichkeitsverteilung für mindestens eines der statischen Objekte und/oder dynamischen Objekte auf Grundlage der empfangenen und/oder erfassten Umfelddaten,
(b) Erstellen einer Risikopotentialfeldkarte des Umfeldes auf Grundlage der geschätzten Zustandswahrscheinlichkeitsverteilung des mindestens einen statischen Objektes und/oder dynamischen Objektes, wobei dies unter Berücksichtigung mindestens eines Risikoergänzungspotentials erfolgt.

Die Schätzeinrichtung ist ferner derart ausgebildet, die Risikopotentialfeldkarten des Umfeldes für den aktuellen und den mindestens einen zukünftigen Zeitpunkt zu einer Risikopotentialfeldkartensequenz zusammenzufassen. Die Vorrichtung umfasst ferner eine Ausgabeeinrichtung, wobei die Ausgabeeinrichtung derart ausgebildet ist, die Risikopotentialfeldkartensequenz als Umfeldabbild auszugeben.

Ferner wird ein Kraftfahrzeug geschaffen, umfassend die erfindungsgemäße Vorrichtung.

Eine Grundidee der Erfindung ist, ein verbessertes Umfeldabbild eines Umfeldes einer mobilen Einrichtung zur Verfügung zu stellen, indem eine Risikopotentialfeldkarte sowohl für einen aktuellen Zeitpunkt als auch für mindestens einen zukünftigen Zeitpunkt mittels einer Schätzeinrichtung erstellt wird auf Grundlage von mittels einer Eingangseinrichtung empfangenen und/oder erfassten Umfelddaten des Umfeldes der mobilen Einrichtung. Die Risikopotentialfeldkarte gibt ortsaufgelöst das Risiko an, im Umfeld der mobilen Einrichtung auf ein Objekt zu treffen. Das Erstellen der Risikopotentialfeldkarte erfolgt hierbei unter Berücksichtigung mindestens eines Risikoergänzungspotentials. Das Risikoergänzungspotential gewichtet eine zuvor geschätzte Zustandswahrscheinlichkeitsverteilung eines statischen und/oder dynamischen Objekts oder gibt für einen Bereich ein Risikopotential als Konstante vor. Hierdurch können zusätzliche Informationen über das Umfeld in die Risikopotentialfeldkarte mit einfließen, welche einzelne Bereiche in der Risikopotentialfeldkarte hinsichtlich eines dort vorherrschenden Risikopotentials beeinflussen können. So kann mittels des mindestens einen Risikoergänzungspotentials beispielsweise ein Bereich in der Risikopotentialkarte als risikofrei markiert werden, weil sich dort keine dynamischen Objekte befinden können. In einem anderen Fall kann ein Risikopotential eines Bereichs in der Risikopotentialfeldkarte erhöht werden, wenn dieser Bereich besonders oft von dynamischen Objekten passiert wird und die Wahrscheinlichkeit, dort ein dynamisches Objekt anzutreffen, deshalb erhöht ist. Die Risikopotentialfeldkarten für den aktuellen Zeitpunkt und den mindestens einen zukünftigen Zeitpunkt werden dann von der Schätzeinrichtung zu einer Risikopotentialfeldkartensequenz zusammengefasst, d.h. die Risikopotentialfeldkarten liegen als Bündel vor. Die zusammengestellte Risikopotentialfeldkartensequenz wird dann von einer Ausgabeeinrichtung ausgegeben.

Der Vorteil der Erfindung liegt darin, dass ein verbessertes Umfeldabbild bereitgestellt werden kann, wobei mittels des Risikoergänzungspotentials weitere Informationen über das Umfeld beim Erstellen des Umfeldabbildes berücksichtigt werden können.

Die mobile Einrichtung kann insbesondere ein Kraftfahrzeug sein. Die mobile Einrichtung kann jedoch auch ein Industrieroboter, beispielsweise ein Transportroboter, ein Rasenmäher oder ein sonstiges Land-, Wasser oder Luftfahrzeug sein.

Die empfangenen oder erfassten Umfelddaten können beispielsweise Sensordaten sein. Hierbei kommen sämtliche bekannten Sensoren in Betracht, beispielsweise Radar, Ultraschall, LIDAR, Kameras, Stereokameras etc., um die Umfelddaten bereitzustellen. Ferner können die Umfelddaten auch von anderen mobilen Einrichtungen stammen, beispielsweise von anderen Kraftfahrzeugen oder einer Verkehrsleittechnik. Die empfangenen und/oder erfassten Umfelddaten können Informationen über die beim Erfassen verwendeten Sensoren umfassen, beispielsweise eine Sensorart, eine Sensorauflösung oder eine Sensorgüte etc.

Die empfangenen und/oder erfassten Umfelddaten umfassen insbesondere zumindest Positionsinformationen von statischen Objekten und/oder dynamischen Objekten im Umfeld der mobilen Einrichtung. Statische Objekte sind insbesondere Objekte, die nicht bewegbar sind, beispielsweise Gebäude oder eine fest installierte Verkehrsinfrastruktur. Ein statisches Objekt kann jedoch auch ein parkendes Kraftfahrzeug sein. Dynamische Objekte sind insbesondere Fahrzeuge auf einer Straße, wie beispielsweise Kraftfahrzeuge oder Fahrräder, Fußgänger auf einem Gehweg oder auf einer Fahrbahn einer Straße, beispielsweise auf einem Zebrastreifen.

Die empfangenen und/oder erfassten Umfelddaten können weitere Informationen umfassen, beispielsweise eine Richtungsinformation, eine Geschwindigkeitsinformation, eine Beschleunigungsinformation, eine Klasseninformation zur Klasse des statischen Objekts und/oder dynamischen Objekts. Ferner können die empfangenen und/oder erfassten Umfelddaten auch weitere Informationen zum Zustand des statischen Objektes und/oder dynamischen Objektes umfassen, beispielsweise bei einer Ampel einen Schaltzustand (rot, gelb, grün) oder bei einem Kraftfahrzeug einen Zustand der Bremsleuchten und/oder der Blinker. Hierzu kann vorgesehen sein, dass eine Mustererkennung und/oder Klassifizierung der im Umfeld der mobilen Einrichtung vorhandenen statischen Objekte und/oder dynamischen Objekte durchgeführt wird und die Ergebnisse als Umfelddaten bereitgestellt werden. Die empfangenen und/oder erfassten Umfelddaten können auch Informationen zu einem Umweltzustand des Umfeldes umfassen, beispielsweise eine Wetterinformation (Regen, Bewölkung, Schnee, Sonnenschein etc.) oder einen Verkehrszustand (Stau etc.).

Insbesondere kann vorgesehen sein, dass die Umfelddaten aus Sensordaten fusioniert worden sind und bereits für die im Umfeld vorhandenen Objekte deren Position, deren Geschwindigkeit und Richtung, sowie deren Klasse (z.B. Gebäude, Lichtsignalanlage, Kraftfahrzeug, Fahrrad, Fußgänger) etc. umfassen.

Die Schätzeinrichtung schätzt eine Zustandswahrscheinlichkeitsverteilung für mindestens eines der statischen Objekte und/oder dynamischen Objekte auf Grundlage der empfangenen und/oder erfassten Umfelddaten. Dies erfolgt beispielsweise, indem für die Position eines statischen Objektes und/oder dynamischen Objektes eine gaußsche Normalverteilung angenommen wird, wobei die Positionsinformation den Erwartungswert bildet und eine Standardabweichung beispielsweise aus einer Sensorgüte des beim Erfassen der Umfelddaten verwendeten Sensors abgeleitet wird. Ferner kann auch eine Eigenschaft des Objektes, beispielsweise eine Ausdehnung, berücksichtigt werden.

Die Zustandswahrscheinlichkeitsverteilung für das mindestens eine statische und/oder dynamische Objekt umfasst insbesondere eine Belegungsinformation, das heißt eine Information darüber, ob das Objekt an der entsprechenden Position anzutreffen ist oder nicht, beispielsweise in Form einer Existenzwahrscheinlichkeitsverteilung. Ferner kann die Zustandswahrscheinlichkeitsverteilung für das mindestens eine statische und/oder dynamische Objekt insbesondere auch eine dem jeweiligen Objekt und seiner Position zugeordnete Risikoinformation umfassen, das heißt eine Information darüber, welches Risiko von dem jeweiligen Objekt für die mobile Einrichtung ausgeht, beispielsweise in Form einer Risikowahrscheinlichkeitsverteilung.

Für den mindestens einen zukünftigen Zeitpunkt ist die Position eines dynamischen Objektes nicht mehr exakt bekannt, sodass sich die Unsicherheit der Position entsprechend vergrößert. Dies wird beim Schätzen berücksichtigt, beispielsweise indem der Erwartungswert entsprechend für den mindestens einen zukünftigen Zeitpunkt z.B. auf Grundlage einer Geschwindigkeit des Objekts geschätzt wird und die Standardabweichung entsprechend der gestiegenen Unsicherheit erhöht wird. Für weitere zukünftige Zeitpunkte erhöht sich die Unsicherheit weiter, was beim Schätzen entsprechend berücksichtigt wird.

Vorzugsweise wird eine Zustandswahrscheinlichkeitsverteilung für sämtliche in den Umfelddaten abgebildeten statischen Objekte und/oder dynamischen Objekte geschätzt, sodass alle sich im Umfeld befindenden Objekte in der Risikopotentialfeldkarte und der Risikopotentialfeldkartensequenz berücksichtigt werden können.

Die Risikopotentialfeldkarte ist eine Karte des Umfeldes, in der an jeder Position der Karte ein Risikowert hinterlegt ist, der angibt, wie wahrscheinlich das Antreffen eines anderen, insbesondere dynamischen, Objektes dort ist. Können die Risikowerte beispielsweise einen Wert im Bereich zwischen 0 und 1 annehmen, so bedeutet der Wert 0 an einer Position in der Risikopotentialfeldkarte, dass dort kein Objekt anzutreffen ist. Der Wert 1 bedeutet hingegen, dass dort ein Objekt anzutreffen ist. Eine solche Risikopotentialfeldkarte kann beispielsweise einen Bereich von 50 m x 50 m, 20 m x 20 m oder auch nur 10 m x 10 m umfassen. Die Risikopotentialfeldkarte ist insbesondere gerastert aufgebaut, das heißt sie besteht aus einzelnen rasterförmig angeordneten Rasterelementen oder Zellen, denen jeweils ein Risikowert zugeordnet ist.

Als Risikoergänzungspotentiale können beispielsweise Eigenschaften des Umfelds berücksichtigt werden. Dies können beispielsweise Informationen zu einer Beschaffenheit des Umfelds sein, wie eine Straßenführung, Verkehrsregeln etc. So kann beispielsweise einem Zebrastreifen ein solches Risikoergänzungspotential zugeordnet werden, denn die Wahrscheinlichkeit, dass ein dynamisches Objekt, in diesem Fall ein Fußgänger, sich auf dem Zebrastreifen aufhält, ist erhöht gegenüber der Wahrscheinlichkeit, dass der Fußgänger sich auf der Fahrbahn aufhält. Die Risikoergänzungspotentiale können auch auf Grundlage einer Karte, beispielsweise einer mit Zusatzinformationen angereicherten Straßenkarte, bereitgestellt werden. Auf diese Weise können Positionen von Zebrastreifen im Umfeld ermittelt werden, denen anschließend ein entsprechendes Risikoergänzungspotential zugeordnet wird.

Ein Risikoergänzungspotential kann als Gewichtungsfaktor der

Zustandswahrscheinlichkeitsverteilung oder als feste Konstante beim Erstellen der Risikopotentialfeldkarte berücksichtigt werden. So kann vorgesehen sein, dass eine geschätzte Zustandswahrscheinlichkeitsverteilung mittels eines Risikoergänzungspotentials gewichtet wird. Im anderen Fall kann vorgesehen sein, dass einem bestimmten Ort bzw. Bereich in der Risikopotentialfeldkarte ein konstanter Risikowert bzw. Risikopotential zugeordnet wird, unabhängig von einer Zustandswahrscheinlichkeitsverteilung eines Objektes. So kann beispielsweise einem Zebrastreifen, auf dem sich kein Fußgänger befindet, pauschal ein konstanter Risikowert von 0,5 zugeordnet werden. Überlappt hingegen eine Zustandswahrscheinlichkeitsverteilung eines Fußgängers mit dem Bereich des Zebrastreifens, so wird dem Bereich des Zebrastreifens ein konstanter Risikowert von 1 zugeordnet.

Bei einem zur Gewichtung dienenden Risikoergänzungspotential können beispielsweise folgende Faktoren vorgesehen sein, mit denen eine Zustandswahrscheinlichkeitsverteilung eines Objektes gewichtet wird:

| | |
|---|---|
| - ein Fußgänger auf der Fahrbahn | Faktor 0,5 |
| - ein Fußgänger auf dem Gehweg | Faktor 1 |
| - ein Kraftfahrzeug auf der Fahrbahn | Faktor 1 |
| - ein Kraftfahrzeug auf dem Gehweg | Faktor 0 (= parkendes Kraftfahrzeug) |

Es kann vorgesehen sein, dass die einzelnen Konstanten bzw. Gewichtungsfaktoren für das Risikoergänzungspotential in einer Datenbank hinterlegt sind, aus der diese bei Bedarf abgefragt werden. Dies kann insbesondere in Abhängigkeit einer Straßenkarte und/oder von Klassen erfolgen, die den statischen oder dynamischen Objekten in den Umfelddaten zugeordnet sind oder zugeordnet werden. Auch können Risikoergänzungspotentiale für verschiedene Situationen hinterlegt sein. Beispielsweise kann das Risikoergänzungspotential bei ansonsten gleichen Bedingungen in Abhängigkeit vom Wetter unterschiedlich gewählt sein.

Durch das Risikoergänzungspotential können insbesondere bestimmte vom Menschen beim Führen einer mobilen Einrichtung, insbesondere eines Kraftfahrzeugs, beobachtete natürliche Verhaltensweisen berücksichtigt werden. So können beispielsweise bestimmte Bereiche oder bestimmte Objekte im Umfeld mit einem Risikoergänzungspotential versehen werden. Ist das Umfeld beispielsweise eine Tempo-30-Zone, in der ein Kraftfahrzeug als mobile Einrichtung unterwegs ist, und befinden sich rechts von dem Kraftfahrzeug quer parkende weitere Kraftfahrzeuge, so wird der Fahrer des Kraftfahrzeugs ein großes parkendes weiteres Kraftfahrzeug, beispielsweise einen großen Transporter, dessen hinterer Teil weit auf die Straße reicht, weiträumiger umfahren als kleinere weitere Kraftfahrzeuge, die lediglich auf Parkplätzen neben der Straße stehen, da der Fahrer den Bereich hinter dem Transporter weniger gut einsehen kann und daher das Risiko höher einschätzt. Entsprechend kann in dieser Situation ein Risikoergänzungspotential gewählt werden, das dieses menschliche Verhalten umsetzt, d.h. der Bereich, in dem sich der Transporter befindet, wird mit einem höheren Faktor gewichtet als die Bereiche, in denen sich die kleineren weiteren Kraftfahrzeuge befinden. Ferner kann der Faktor auch mit einem Abstand zu einem Objekt variieren, insbesondere kann der Faktor mit größerem Abstand ansteigen. Je weiter entfernt ein Objekt ist, beispielsweise ein parkendes Fahrzeug, welches einen dahinter liegenden Bereich verdeckt, desto größer wird dann das Risiko eingeschätzt. Hierdurch kann eine sich mit ansteigenden Abstand erhöhende Unsicherheit berücksichtigt werden.

Durch das Risikoergänzungspotential kann insbesondere ein Sichtschatten, das heißt ein nicht einsehbarer Bereich, verbessert berücksichtigt werden. Ein solcher Sichtschatten kann beispielsweise von einem parkenden Fahrzeug, von Gebäuden oder sonstigen Objekten etc. hervorgerufen werden.

Das mindestens eine Risikoergänzungspotential wird insbesondere mittels der Schätzeinrichtung aus den empfangenen und/oder erfassten Umfelddaten abgeleitet und/oder auf Grundlage der empfangenen und/oder erfassten Umfelddaten aus einer Datenbank abgefragt.

Die ausgegebene Risikopotentialfeldkartensequenz wird insbesondere einer Planungseinrichtung der mobilen Einrichtung zugeführt, welche auf Grundlage der Risikopotentialfeldkartensequenz eine Trajektorienplanung durchführt, das heißt das zukünftige Verhalten bzw. die zukünftige Bewegung der mobilen Einrichtung plant. Vereinfacht ausgedrückt plant die Planungseinrichtung die Trajektorie der mobilen Einrichtung dann derart, dass Bereiche mit hohem Risikowert bzw. hohem Risikopotential möglichst gemieden werden und die Trajektorie in Bereichen liegt, die einen geringen Risikowert bzw. ein geringes Risikopotential aufweisen.

Vorzugsweise wird das Verfahren zu weiteren zukünftigen Zeitpunkten wiederholt, sodass stets eine aktualisierte Risikopotentialfeldkartensequenz bereitgestellt werden kann, in der das geschätzte zukünftige Verhalten dynamischer Objekte im Umfeld der mobilen Einrichtung fortlaufend aktualisiert wird.

In einer Ausführungsform ist vorgesehen, dass beim Schätzen der Zustandswahrscheinlichkeitsverteilung Freiheitsgrade des mindestens einen statischen Objektes und/oder dynamischen Objektes berücksichtigt werden. Handelt es sich bei einem dynamischen Objekt beispielsweise um ein anderes an einer Kreuzung wartendes Kraftfahrzeug, so kann das Kraftfahrzeug die Kreuzung in drei mögliche Richtungen wieder verlassen (geradeaus fahren, rechts abbiegen, links abbiegen). Dies kann beim Schätzen der Zustandswahrscheinlichkeit für die zukünftigen Zeitpunkte berücksichtigt werden. So kann die Zustandswahrscheinlichkeitsverteilung für den zukünftigen Zeitpunkt entsprechend den drei möglichen Richtungen ausgebildet sein. Ist in einem anderen Fall beispielsweise an einer solchen Kreuzung ein Linksabbiegen für das andere Kraftfahrzeug verboten, so kann dies direkt in der Zustandswahrscheinlichkeitsverteilung oder in Form eines Risikoergänzungspotential berücksichtigt werden. Ein Risikowert in der Risikopotentialkarte ist dann entsprechend für ein Linksabbiegen des anderen Kraftfahrzeugs verringert, d.h. die Wahrscheinlichkeit, das andere Kraftfahrzeug zu einem zukünftigen Zeitpunkt in dem betreffenden Bereich angetroffen wird, ist verringert. In der Vorrichtung ist die Schätzeinrichtung entsprechend derart ausgebildet, die Freiheitsgrade beim Schätzen der Zustandswahrscheinlichkeitsverteilung zu berücksichtigen.

In einer weiteren Ausführungsform ist vorgesehen, dass eine Intentionsinformation mindestens eines in den Umfelddaten abgebildeten statischen Objekts und/oder dynamischen Objekts aus den empfangenen und/oder erfassten Umfelddaten ermittelt wird, wobei das Schätzen der Zustandswahrscheinlichkeitsverteilung für das mindestens eine statische Objekt und/oder dynamische Objekt zusätzlich auf Grundlage der jeweils ermittelten Intentionsinformation erfolgt. Hierdurch kann das Schätzen der Zustandswahrscheinlichkeitsverteilung insbesondere für den mindestens einen zukünftigen Zeitpunkt deutlich verbessert werden. Ist ein betrachtetes dynamisches Objekt beispielsweise ein an einer Kreuzung wartendes anderes Kraftfahrzeug, dessen linker Blinker aktiv ist, so kann die Wahrscheinlichkeit, dass das Fahrzeug sich zu einem zukünftigen Zeitpunkt entsprechend auf dem links von ihm liegenden Teil der Kreuzung befindet, erhöht werden. Im Gegensatz hierzu kann die Wahrscheinlichkeit, dass das andere Kraftfahrzeug sich auf dem rechts von ihm liegenden Teil der Kreuzung oder auf der vor dem anderen Kraftfahrzeug liegenden Strecke der Kreuzung befindet, verringert werden. Dies wird beim Schätzen der Zustandswahrscheinlichkeitsverteilung für das andere Kraftfahrzeug entsprechend berücksichtigt. Intentionsinformationen können beispielsweise auch Informationen zu einer Bewegungsrichtung und/oder einer Blickrichtung oder einer Gestik eines Fußgängers umfassen. Bei anderen Kraftfahrzeugen kommen als Intentionsinformation neben einem aktiven Blinker auch ein Zustand von Bremslichtern oder eine Blickrichtung oder eine Gestik eines Fahrers des anderen Kraftfahrzeugs in Betracht. In der Vorrichtung kann hierzu eine Intentionserkennungseinrichtung vorgesehen sein, welche derart ausgebildet ist, diesen Verfahrensschritt auszuführen.

In einer weiteren Ausführungsform ist vorgesehen, dass die Risikopotentialfeldkartensequenz als eine aus Einzelbildern bestehende Filmsequenz ausgegeben wird. Anders ausgedrückt kann dann jede der in der Risikopotentialfeldkartensequenz enthaltene Risikopotentialfeldkarte als Bitmap-Grafik aufgefasst werden, in der ein einzelner Pixel einem Risikowert für die mit dem Pixel korrespondierende Position im Umfeld entspricht. Die Werte können beispielsweise als Graustufenwerte kodiert sein und zwischen 0 und 255 liegen.

In einer zur vorgenannten Ausführungsform alternativen Ausführungsform ist vorgesehen, dass die Risikopotentialfeldkartensequenz als Menge von einzelnen Rasterelementen jeweils zugeordneten zeitabhängigen Funktionen ausgegeben wird. Eine solche Funktion kann beispielsweise eine Polynom- oder eine Splinefunktion sein. Hierdurch ist es auf einfache Weise möglich, zeitabhängige Zwischenwerte für die Risikowerte in der Risikopotentialfeldkarte zu generieren.

In einer weiteren Ausführungsform ist vorgesehen, dass beim Schätzen der Zustandswahrscheinlichkeitsverteilung ein Straßengraph berücksichtigt wird. Ein solcher Straßengraph repräsentiert eine Menge von Straßen und die zwischen diesen Straßen bestehenden Verbindungen. Auf Grundlage des Straßengraphs kann beispielsweise eine zukünftige Bewegungsrichtung eines anderen Kraftfahrzeugs verbessert geschätzt werden, da aus dem Straßengraph ableitet werden kann, in welche Richtungen sich das andere Kraftfahrzeug bewegen kann bzw. bewegen darf. Das Schätzen der Zustandswahrscheinlichkeitsverteilung ist daher verbessert möglich. In der Vorrichtung ist die Schätzeinrichtung entsprechend hierzu ausgebildet.

In einer weiteren Ausführungsform ist vorgesehen, dass in den Umfelddaten von statischen Objekten und/oder dynamischen Objekten verdeckte Bereiche identifiziert werden und diesen identifizierten Bereichen jeweils mindestens ein Risikoergänzungspotential zugeordnet wird. Ein verdeckter Bereich soll hierbei ein Bereich sein, der auf Grund seiner Position nicht von den Sensoren, welche die Umfelddaten erfasst bzw. bereitgestellt haben, erfassbar ist. Da in diesen verdeckten Bereichen eine Aussage über die Existenz von statischen Objekten und/oder dynamischen Objekten nicht möglich ist, wird diesen Bereichen ein Risikoergänzungspotential zugeordnet, um diese dennoch in der Risikopotentialfeldkarte zu berücksichtigen. So können verdeckten Bereichen beispielsweise pauschal Risikowerte von 0,5 zugeordnet werden, wenn die Risikowerte in der Risikopotentialfeldkarte im Bereich zwischen 0 und 1 liegen. Eine mit der Trajektorienplanung befasste Planungseinrichtung kann dann diese verdeckten Bereiche meiden, solange bis Umfelddaten über diese Bereiche zur Verfügung stehen. In der Vorrichtung ist die Schätzeinrichtung entsprechend hierzu ausgebildet.

In einer Ausführungsform ist vorgesehen, dass auf Grundlage mindestens einer der Risikopotentialfeldkarten oder der Risikopotentialfeldkartensequenz eine Handlungsempfehlung für die mobile Einrichtung mittels einer Empfehlungseinrichtung abgeleitet und mittels der Ausgabeeinrichtung ausgegeben wird. Beispielsweise kann eine solche Handlungsempfehlung eine Empfehlung sein, eine Geschwindigkeit zu verringern oder eine Vollbremsung durchzuführen. Die Vorrichtung umfasst hierzu eine entsprechend ausgebildete Empfehlungseinrichtung.

Teile der Vorrichtung können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Bereitstellen eines Umfeldabbildes eines Umfeldes einer mobilen Einrichtung;
- Fig. 2: eine schematische Darstellung eines Umfelds eines Kraftfahrzeugs;
- Fig. 3: für einen aktuellen Zeitpunkt t = 0 eine schematische Darstellung einer aus dem in Fig. 2 gezeigten Umfeld abgeleiteten Potentialfeldkarte;
- Fig. 4: für einen zukünftigen Zeitpunkt t = 1 eine schematische Darstellung einer aus dem in Fig. 2 gezeigten Umfeld abgeleiteten Potentialfeldkarte;
- Fig. 5: für einen zukünftigen Zeitpunkt t = 2 eine schematische Darstellung einer aus dem in Fig. 2 gezeigten Umfeld abgeleiteten Potentialfeldkarte.

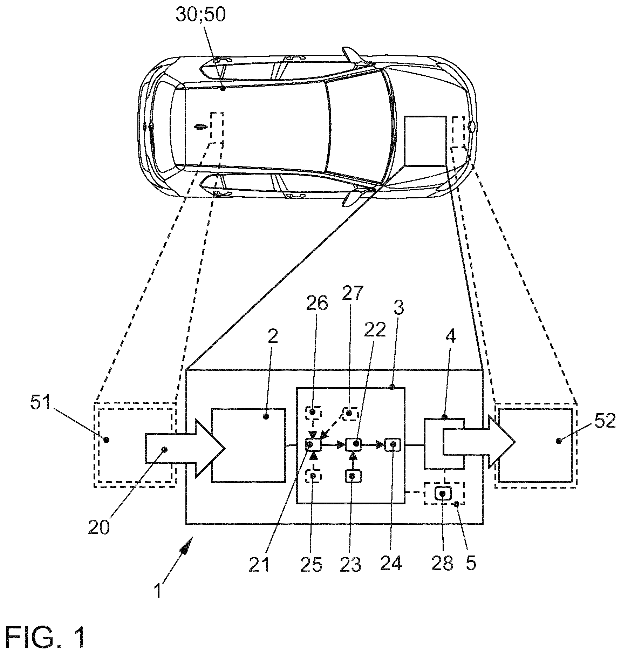

In Fig. 1 ist eine schematische Darstellung einer Ausführungsform der Vorrichtung 1 zum Bereitstellen eines Umfeldabbildes eines Umfeldes einer mobilen Einrichtung 30 gezeigt. In der gezeigten Ausführungsform ist die mobile Einrichtung 30 ein Kraftfahrzeug 50. Prinzipiell kann die mobile Einrichtung 30 aber auch anders ausgebildet sein, beispielsweise als Transportroboter.

Die Vorrichtung 1 umfasst eine Eingangseinrichtung 2, eine Schätzeinrichtung 3 und eine Ausgabeeinrichtung 4. Die Eingangseinrichtung 2 ist derart ausgebildet, Umfelddaten 20 zu empfangen und/oder zu erfassen, wobei die Umfelddaten 20 das Umfeld abbilden und Informationen über statische Objekte und/oder dynamische Objekte im Umfeld umfassen. Die Umfelddaten 20 werden von Umfeldsensoren 51 des Kraftfahrzeugs 50 bereitgestellt. Dies können beispielsweise Radarsensoren, Ultraschallsensoren, LIDAR-Sensoren, Kameras und/oder Stereokameras etc. sein. Auch eine Sensordatenfusion zum Bereitstellen der Umfelddaten 20 kann vorgesehen sein. Die Umfelddaten 20 können weitere das Umfeld abbildende Informationen umfassen, wie beispielsweise Richtungsinformationen, Geschwindigkeitsinformationen und/oder Beschleunigungsinformationen der Objekte und/oder Klasseninformationen zur Klasse der statischen Objekte und/oder dynamischen Objekte. Ferner können die empfangenen und/oder erfassten Umfelddaten 20 auch weitere Informationen zum Zustand des statischen Objektes und/oder dynamischen Objektes umfassen, beispielsweise einen Schaltzustand einer Ampel (rot, gelb, grün) oder einen Zustand der Bremsleuchten und/oder der Blinker eines weiteren Kraftfahrzeugs. Hierzu kann vorgesehen sein, dass eine Mustererkennung und/oder Klassifizierung der statischen Objekte und/oder dynamischen Objekte durchgeführt wird und die Ergebnisse als Umfelddaten 20 bereitgestellt werden. Die empfangenen und/oder erfassten Umfelddaten 20 können auch Informationen zu einem Umweltzustand des Umfeldes umfassen, beispielsweise eine Wetterinformation (Regen, Bewölkung, Schnee, Sonnenschein etc.) oder einen Verkehrszustand.

Die empfangenen und/oder erfassten Umfelddaten 20 werden der Schätzeinrichtung 3 zugeführt. Die Schätzeinrichtung 3 ist derart ausgebildet, die folgenden Schritte für einen aktuellen und für mindestens einen zukünftigen Zeitpunkt auszuführen:
(a) Schätzen einer Zustandswahrscheinlichkeitsverteilung 21 für mindestens eines der statischen Objekte und/oder dynamischen Objekte auf Grundlage der empfangenen und/oder erfassten Umfelddaten 20,
(b) Erstellen einer Risikopotentialfeldkarte 22 des Umfeldes auf Grundlage der geschätzten Zustandswahrscheinlichkeitsverteilung 21 des mindestens einen statischen Objektes und/oder dynamischen Objektes, wobei dies unter Berücksichtigung mindestens eines Risikoergänzungspotentials 23 erfolgt.

Die Schätzeinrichtung 3 führt diese Schritte vorzugsweise für sämtliche in den Umfelddaten 20 enthaltenen statischen Objekte und/oder dynamischen Objekte durch. Vorzugsweise führt die Schätzeinrichtung 3 die Schritte für weitere zukünftige Zeitpunkte durch, so dass ein zukünftiges Verhalten der Objekte prädiziert werden kann.

Die Schätzeinrichtung 3 ist ferner derart ausgebildet, die Risikopotentialfeldkarten 22 des Umfeldes für den aktuellen und den mindestens einen zukünftigen Zeitpunkt zu einer Risikopotentialfeldkartensequenz 24 zusammenzufassen.

Die Risikopotentialfeldkartensequenz 24 wird der Ausgabeeinrichtung 4 zugeführt, welche diese dann als aktuelles Umfeldabbild ausgibt, beispielsweise an eine Planungseinrichtung 52 des Kraftfahrzeugs 50. Die Planungseinrichtung 52 plant dann eine zukünftige Trajektorie des Kraftfahrzeugs 50 auf Grundlage der ausgegebenen Risikopotentialfeldkartensequenz 24.

Vorzugsweise wird das Verfahren von der Vorrichtung 1 zum nächstfolgenden Zeitpunkt wiederholt. Auf diese Weise kann ein fortlaufend aktualisiertes Umfeldabbild bereitgestellt werden, in dem das zukünftige Verhalten von Objekten stets auf Grundlage aktuell empfangener und/oder erfasster Umfelddaten 20 geschätzt wird.

In einer Ausführungsform kann vorgesehen sein, dass beim Schätzen der Zustandswahrscheinlichkeitsverteilung 21 Freiheitsgrade 25 des mindestens einen statischen Objektes und/oder dynamischen Objektes berücksichtigt werden.

Es kann ferner vorgesehen sein, dass die Schätzeinrichtung 3 eine Intentionsinformation 26 mindestens eines in den Umfelddaten 20 abgebildeten statischen Objekts und/oder dynamischen Objekts aus den empfangenen und/oder erfassten Umfelddaten 20 ermittelt, wobei das Schätzen der Zustandswahrscheinlichkeitsverteilung 21 für das mindestens eine statische Objekt und/oder dynamische Objekt zusätzlich auf Grundlage der jeweils ermittelten Intentionsinformation 26 erfolgt. Die Intentionsinformation wird beispielsweise von einer Intentionserkennungseinrichtung der Vorrichtung 1 ermittelt und bereitgestellt (nicht gezeigt).

Es kann vorgesehen sein, dass die Risikopotentialfeldkartensequenz 24 als eine aus Einzelbildern bestehende Filmsequenz ausgegeben wird. Alternativ hierzu kann vorgesehen sein, dass die Risikopotentialfeldkartensequenz 24 als Menge von einzelnen Rasterelementen jeweils zugeordneten zeitabhängigen Funktionen ausgegeben wird. Die zeitabhängigen Funktionen können beispielsweise Polynom- oder Splinefunktionen sein.

Ferner kann vorgesehen sein, dass beim Schätzen der Zustandswahrscheinlichkeitsverteilung 21 ein Straßengraph 27 berücksichtigt wird. Dieser kann beispielsweise in einem Speicher hinterlegt sein (nicht gezeigt) und der Schätzeinrichtung 3 bei Bedarf zur Verfügung gestellt werden. Es kann jedoch auch vorgesehen sein, dass der Straßengraph 27 von den Umfelddaten 20 umfasst ist.

Es kann vorgesehen sein, dass in den Umfelddaten 20 von statischen Objekten und/oder dynamischen Objekten verdeckte Bereiche identifiziert werden und diesen verdeckten Bereichen jeweils mindestens ein Risikoergänzungspotential 23 zugeordnet wird.

Es kann vorgesehen sein, dass die Vorrichtung 1 eine Empfehlungseinrichtung 5 umfasst, wobei diese auf Grundlage mindestens einer der Risikopotentialfeldkarten 23 oder der Risikopotentialfeldkartensequenz 24 eine Handlungsempfehlung für das Kraftfahrzeug 50 ableitet. Die abgeleitete Handlungsempfehlung 28 wird der Ausgabeeinrichtung 4 zugeleitet und von dieser ausgegeben, beispielsweise an die Planungseinrichtung 52 des Kraftfahrzeugs 50. Die Handlungsempfehlung 28 kann beispielsweise eine Empfehlung sein, eine Geschwindigkeit zu verringern oder zu erhöhen oder eine Vollbremsung durchzuführen.

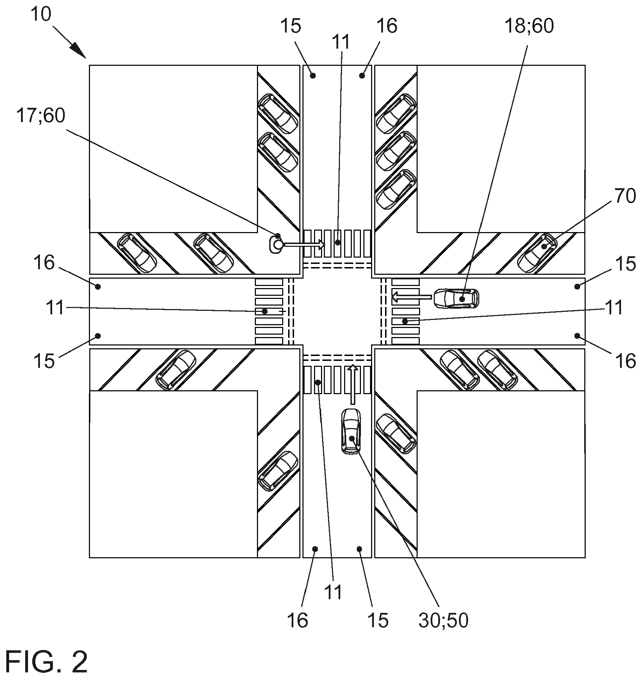

In Fig. 2 ist eine schematische Darstellung eines Umfelds 10 eines Kraftfahrzeugs 50 zur Verdeutlichung der Erfindung gezeigt. Das Umfeld 10 ist in dem gezeigten Beispiel eine Kreuzung mit vier Zuflüssen 15 und vier Abflüssen 16. In dem Umfeld 10 befinden sich ein Kraftfahrzeug 50 als mobile Einrichtung 30, ein Fußgänger 17 als dynamisches Objekt 60 und ein weiteres Kraftfahrzeug 18 als dynamisches Objekt 60. Ferner umfasst die Kreuzung im Umfeld 10 für jeden der Zuflüsse 15 bzw. Abflüsse 16 einen Zebrastreifen 11 und parkende Kraftfahrzeuge 70 (der Übersichtlichkeit halber wurde nur eins mit einem Bezugszeichen versehen).

Wie von den Pfeilen angedeutet, bewegen sich das Kraftfahrzeug 50 und das weitere Kraftfahrzeug 18 auf die Kreuzungsmitte zu. Der Fußgänger 17 ist in Richtung des Zebrastreifens 11 unterwegs.

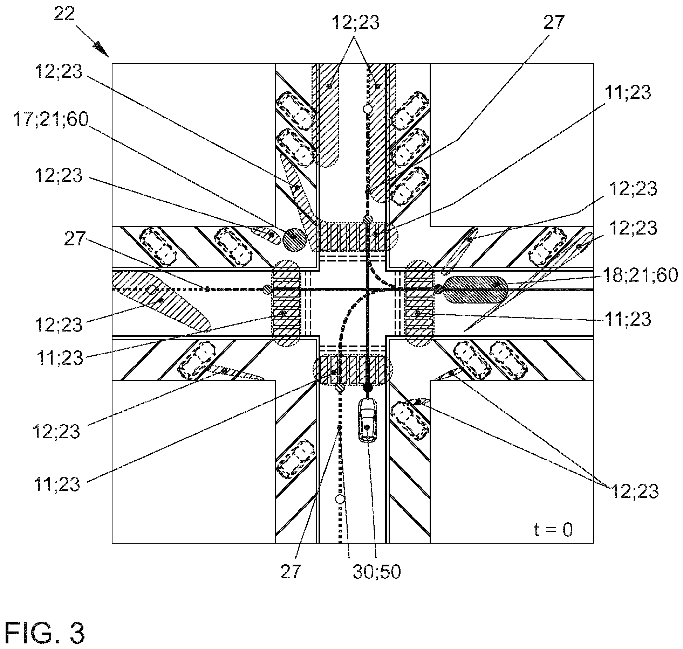

In Fig. 3 ist eine schematische Darstellung einer aus dem in Fig. 2 gezeigten Umfeld abgeleiteten Risikopotentialfeldkarte 22 für einen aktuellen Zeitpunkt t = 0 gezeigt. Die Risikopotentialfeldkarte 22 zeigt ortsaufgelöst das Risiko für das Vorhandensein eines Objektes 60 im Umfeld des Kraftfahrzeugs 50 an, das heißt es sind Risikopotentialfelder im Umfeld des Kraftfahrzeugs 50 dargestellt. Dem weiteren Kraftfahrzeug 18 und dem Fußgänger 17 als dynamische Objekte 60 sind jeweils Zustandswahrscheinlichkeitsverteilungen 21 zugeordnet. Da in den empfangenen und/oder erfassten Umfelddaten kein Blinken als Intentionsinformation von dem weiteren Kraftfahrzeug 18 ermittelt wurde, ist die Wahrscheinlichkeit, dass das weitere Kraftfahrzeug 18 geradeaus weiterfährt, größer, als dass es links oder rechts abbiegt. Dies ist schematisch durch eine unterschiedlich starke Schraffur des reduzierten Straßengraphen 27 dargestellt, wobei eine dunkle Schraffur für eine höhere Wahrscheinlichkeit steht eine leichte Schraffur bzw. ein weiße Linie hingegen für eine geringere Wahrscheinlichkeit. Aus dem Straßengraphen 27 lassen sich drei Freiheitsgrade (geradeaus fahren, links abbiegen, rechts abbiegen) des weiteren Kraftfahrzeugs 18 ableiten.

Die Zebrastreifen 11 sind mit einem Risikoergänzungspotential 23 markiert, sodass in der Risikopotentialfeldkarte 22 dort ein erhöhter Risikowert im Risikopotentialfeld vorliegt. Die Risikopotentialfeldkarte 22 kann auch als ortsaufgelöste Kostenkarte aufgefasst werden, in der Orte mit erhöhtem Risikopotential bzw. ausgedehnte Bereiche in Form von Risikopotentialfeldern bei einer späteren Trajektorienplanung mit höheren Kosten belegt werden als Bereiche mit geringerem oder gar keinem Risikopotential. Von Gebäuden oder parkenden Kraftfahrzeugen 70 verdeckten Bereichen 12 ist ebenfalls jeweils ein Risikoergänzungspotential 23 zugeordnet, welche jeweils zu einzelnen Risikopotentialen bzw. Risikopotentialfeldern in der Risikopotentialfeldkarte 22 führen.

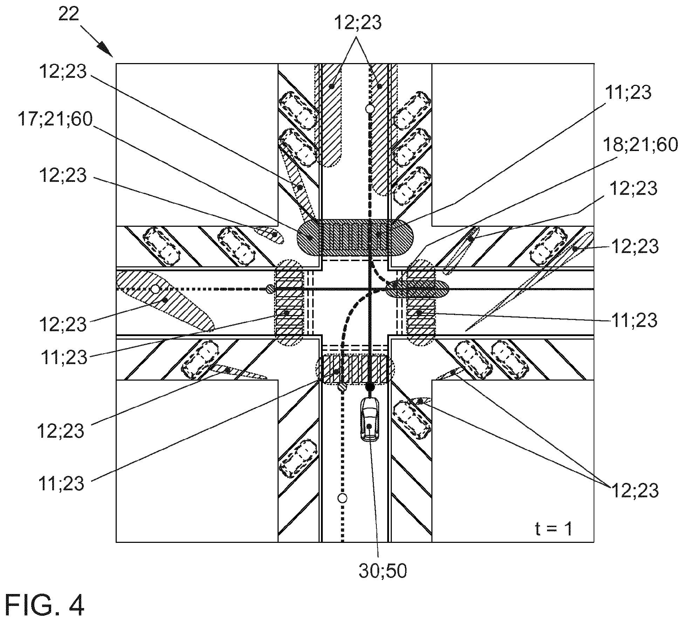

In Fig. 4 ist eine schematische Darstellung einer aus dem in Fig. 2 gezeigten Umfeld abgeleiteten Risikopotentialfeldkarte 22 für einen zukünftigen Zeitpunkt t = 1 gezeigt, welche mittels der Schätzeinrichtung erstellt wurde. Man erkennt deutlich, dass die Fläche der Zustandswahrscheinlichkeitsverteilung 21 für den Fußgänger 17 sich im Vergleich zur Risikopotentialfeldkarte 22 in Fig. 3 vergrößert hat, da sich die Unsicherheit beim Schätzen der Position des Fußgängers 17 zum Zeitpunkt t = 1 vergrößert hat. Hieraus ergibt sich ein entsprechendes Risikopotentialfeld in der Risikopotentialfeldkarte 22, wobei die Zustandswahrscheinlichkeitsverteilung 21 in der Risikopotentialfeldkarte 22 entsprechend durch das Risikoergänzungspotential 23 des in diesem Bereich liegenden Zebrastreifens 11 gewichtet wird, im einfachsten Fall mit einem Faktor von 1 (wenn der Wertebereich zwischen 0 und 1 liegt) bzw. einem Faktor von 100 %.

Entsprechend hat sich auch die Zustandswahrscheinlichkeitsverteilung 21 des weiteren Kraftfahrzeugs 18 verbreitert, sodass auch hier ein entsprechend vergrößertes Risikopotentialfeld in der Risikopotentialfeldkarte 22 erzeugt wird.

Die sonstigen Bereiche bzw. Risikopotentialfelder sind gleich denen der in der Fig. 3 gezeigten Risikopotentialfeldkarte 22, d.h. die Zebrastreifen 11 und die verdeckten Bereiche 12 führen zu unveränderten Risikopotentialfeldern in der Risikopotentialfeldkarte 22. Auch die Wahrscheinlichkeit, in welche Richtung das weitere Kraftfahrzeug 18 weiterfährt, bleibt unverändert.

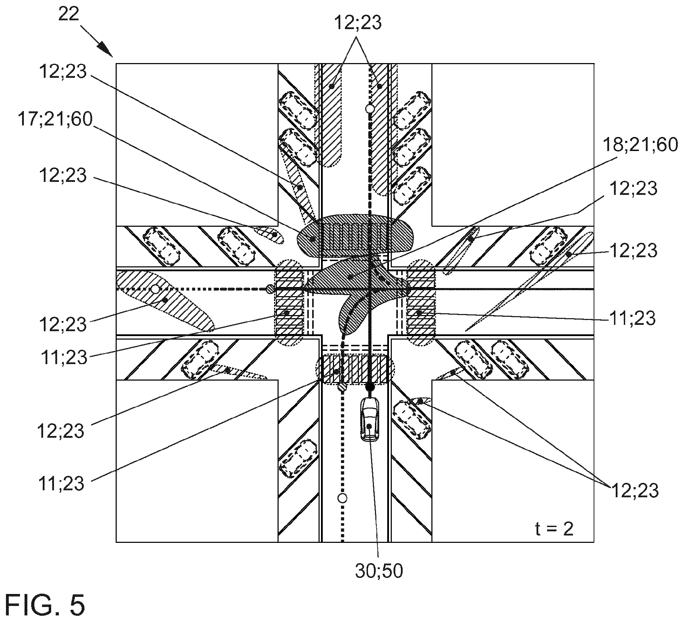

In Fig. 5 ist eine schematische Darstellung einer aus dem in Fig. 2 gezeigten Umfeld abgeleiteten Risikopotentialfeldkarte 22 für einen zukünftigen Zeitpunkt t = 2 gezeigt, welche mittels der Schätzeinrichtung erstellt wurde. Man erkennt deutlich, dass sich die Fläche der Zustandswahrscheinlichkeitsverteilung 21 für den Fußgänger 17 weiter vergrößert hat, da sich die Unsicherheit beim Schätzen der Position des Fußgängers 17 zum Zeitpunkt t = 2 nochmals vergrößert hat. Hieraus ergibt sich ein entsprechendes Risikopotentialfeld in der Risikopotentialfeldkarte 22, wobei die Zustandswahrscheinlichkeitsverteilung 21 in der Risikopotentialfeldkarte 22 entsprechend durch das Risikoergänzungspotential 23 des in diesem Bereich liegenden Zebrastreifens 11 gewichtet wird, im einfachsten Fall mit einem Faktor von 1 (wenn der Wertebereich zwischen 0 und 1 liegt) bzw. einem Faktor von 100 %.

Die Fläche der Zustandswahrscheinlichkeitsverteilung 21 des weiteren Kraftfahrzeugs 18 hat sich ebenfalls vergrößert und verteilt sich nunmehr auf alle drei möglichen Richtungen, in die sich das weitere Kraftfahrzeug 18 gemäß seinen Freiheitsgraden bewegen kann. Das entsprechende Risikopotentialfeld in der Risikopotentialfeldkarte 22 verteilt sich entsprechend in drei Richtungen, wobei die Wahrscheinlichkeit eines Geradeausfahrens gegenüber einem Abbiegen weiterhin größer ist, da ein Blinken in den Umfelddaten zum aktuellen Zeitpunkt (t = 0) nicht erfasst wurde.

Die sonstigen Bereiche bzw. Risikopotentialfelder sind gleich geblieben, d.h. die Zebrastreifen 11 und die verdeckten Bereiche 12 führen zu unveränderten Risikopotentialfeldern in der Risikopotentialfeldkarte 22. Auch die Wahrscheinlichkeit, in welche Richtung das weitere Kraftfahrzeug 18 weiterfährt, bleibt unverändert.

Die in den Figuren 3 bis 5 gezeigten Risikopotentialfeldkarten 22 werden mittels der Schätzeinrichtung zu einer Risikopotentialfeldkartensequenz zusammengefasst und mittels der Ausgabeeinrichtung ausgegeben. Die Risikopotentialfeldkartensequenz umfasst dann drei Risikopotentialfeldkarten für die Zeitpunkte t = 0 bis t = 2.

Zum Zeitpunkt t = 1 kann vorgesehen sein, dass das Verfahren mittels der Vorrichtung 1 wiederholt wird, wobei hierbei aktualisierte Umfelddaten berücksichtigt werden. Wenn eine Risikopotentialfeldkartensequenz zu jedem Zeitpunkt drei Risikopotentialfeldkarten 22 umfasst, dann umfasst die nächste Risikopotentialfeldkartensequenz Risikopotentialfeldkarten 22 für die Zeitpunkte t = 1 bis t = 3 usw.

Auf Grundlage der ausgegebenen Risikopotentialfeldkartensequenzen kann eine Planungseinrichtung des Kraftfahrzeugs 50 stets eine aktuelle Trajektorienplanung vornehmen und das Kraftfahrzeug verbessert steuern bzw. dessen Längs- und Querführung verbessert regeln.

Die Ausführungsbeispiele beziehen sich stets auf ein Kraftfahrzeug 50. Die mobile Einrichtung 30 kann jedoch auch ein Transportroboter oder sonstiges Fahrzeug sein, das insbesondere automatisiert gefahren werden kann.

### Bezugszeichenliste

- 1: Vorrichtung
- 2: Eingangseinrichtung
- 3: Schätzeinrichtung
- 4: Ausgabeeinrichtung
- 5: Empfehlungseinrichtung
- 10: Umfeld
- 11: Zebrastreifen
- 12: verdeckter Bereich
- 15: Zufluss
- 16: Abfluss
- 17: Fußgänger
- 18: weiteres Kraftfahrzeug
- 20: Umfelddaten
- 21: Zustandswahrscheinlichkeitsverteilung
- 22: Risikopotentialfeldkarte
- 23: Risikoergänzungspotential
- 24: Risikopotentialfeldkartensequenz
- 25: Freiheitsgrad
- 26: Intentionsinformation
- 27: Straßengraph
- 28: Handlungsempfehlung
- 30: mobile Einrichtung
- 50: Kraftfahrzeug
- 51: Umfeldsensoren
- 52: Planungseinrichtung
- 60: dynamisches Objekt
- 70: parkendes Kraftfahrzeug

## Patentansprüche

1. Verfahren zum Bereitstellen eines Umfeldabbildes eines Umfeldes (10) einer mobilen Einrichtung (30), umfassend die folgenden Schritte:
Empfangen und/oder Erfassen von Umfelddaten (20) mittels einer Eingangseinrichtung (2), wobei die Umfelddaten (20) das Umfeld (10) abbilden und
Informationen über statische Objekten und/oder dynamische Objekte (60) im Umfeld (10) umfassen,
Ausführen der folgenden Schritte für einen aktuellen und für mindestens einen zukünftigen Zeitpunkt mittels einer Schätzeinrichtung (3):
(a) Schätzen einer Zustandswahrscheinlichkeitsverteilung (21) für mindestens eines der statischen Objekte und/oder dynamischen Objekte (60) auf Grundlage der empfangenen und/oder erfassten Umfelddaten (20),
(b) Erstellen einer Risikopotentialfeldkarte (22) des Umfeldes (10) auf Grundlage der geschätzten Zustandswahrscheinlichkeitsverteilung (21) des mindestens einen statischen Objektes und/oder dynamischen Objektes (60), wobei dies unter Berücksichtigung mindestens eines Risikoergänzungspotentials (23) erfolgt, sodass zusätzliche Informationen über das Umfeld (10) in die Risikopotentialfeldkarte (22) mit einfließen können, wobei das Risikoergänzungspotential (23) als Gewichtungsfaktor der Zustandswahrscheinlichkeitsverteilung oder als orts- oder bereichsabhängige Konstante beim Erstellen der Risikopotentialfeldkarte (22) berücksichtigt wird,
wobei die Risikopotentialfeldkarte (22) eine Karte des Umfeldes (10) ist, in der an jeder Position der Karte ein Risikowert hinterlegt ist, der angibt, wie wahrscheinlich das Antreffen eines anderen Objektes (60) dort ist;
Zusammenfassen der Risikopotentialfeldkarten (22) des Umfeldes (10) für den aktuellen Zeitpunkt und den mindestens einen zukünftigen Zeitpunkt zu einer Risikopotentialfeldkartensequenz (24), und
Ausgeben der Risikopotentialfeldkartensequenz (24) als Umfeldabbild mittels einer Ausgabeeinrichtung (4).

2. Verfahren nach Anspruch 1, **dadurch gekennzeichnet, dass** beim Schätzen der Zustandswahrscheinlichkeitsverteilung (21) Freiheitsgrade (25) des mindestens einen statischen Objektes und/oder dynamischen Objektes (60) berücksichtigt werden.

3. Verfahren nach Anspruch 1 oder 2, **dadurch gekennzeichnet, dass** eine Intentionsinformation (26) mindestens eines in den Umfelddaten (20) abgebildeten statischen Objektes und/oder dynamischen Objektes (60) aus den empfangenen und/oder erfassten Umfelddaten (20) ermittelt wird, wobei das Schätzen der Zustandswahrscheinlichkeitsverteilung (21) für das mindestens eine statische Objekt und/oder dynamische Objekt (60) zusätzlich auf Grundlage der jeweils ermittelten Intentionsinformation (26) erfolgt.

4. Verfahren nach einem der vorangegangenen Ansprüche, **dadurch gekennzeichnet, dass** die Risikopotentialfeldkartensequenz (24) als eine aus Einzelbildern bestehende Filmsequenz ausgegeben wird.

5. Verfahren nach einem der Ansprüche 1 bis 3, **dadurch gekennzeichnet, dass** die Risikopotentialfeldkartensequenz (24) als Menge von einzelnen Rasterelementen jeweils zugeordneten zeitabhängigen Funktionen ausgegeben wird.

6. Verfahren nach einem der vorangegangenen Ansprüche, **dadurch gekennzeichnet, dass** beim Schätzen der Zustandswahrscheinlichkeitsverteilung (21) ein Straßengraph (27) berücksichtigt wird.

7. Verfahren nach einem der vorangegangenen Ansprüche, **dadurch gekennzeichnet, dass** in den Umfelddaten (20) von statischen Objekten und/oder dynamischen Objekten (60) verdeckte Bereiche (12) identifiziert werden und diesen identifizierten verdeckten Bereichen (12) jeweils mindestens ein Risikoergänzungspotential (23) zugeordnet wird.

8. Verfahren nach einem der vorangegangenen Ansprüche, **dadurch gekennzeichnet, dass** auf Grundlage mindestens einer der Risikopotentialfeldkarten (22) oder der Risikopotentialfeldkartensequenz (24) eine Handlungsempfehlung (28) für die mobile Einrichtung (28) mittels einer Empfehlungseinrichtung (5) abgeleitet und mittels der Ausgabeeinrichtung (4) ausgegeben wird.

9. Vorrichtung (1) zum Bereitstellen eines Umfeldabbildes eines Umfeldes (10) einer mobilen Einrichtung (30), umfassend:
eine Eingangseinrichtung (2), wobei die Eingangseinrichtung (2) derart ausgebildet ist, Umfelddaten (20) zu empfangen und/oder zu erfassen, wobei die Umfelddaten (20) das Umfeld (10) abbilden und Informationen über statische Objekte und/oder dynamische Objekte (60) im Umfeld (10) umfassen,
eine Schätzeinrichtung (3), wobei die Schätzeinrichtung (3) derart ausgebildet ist, die folgenden Schritte für einen aktuellen und für mindestens einen zukünftigen Zeitpunkt auszuführen:
(a) Schätzen einer Zustandswahrscheinlichkeitsverteilung (21) für mindestens eines der statischen Objekte und/oder dynamischen Objekte (60) auf Grundlage der empfangenen und/oder erfassten Umfelddaten (20),
(b) Erstellen einer Risikopotentialfeldkarte (22) des Umfeldes (10) auf Grundlage der geschätzten Zustandswahrscheinlichkeitsverteilung (21) des mindestens einen statischen Objekte und/oder dynamischen Objektes (60), wobei dies unter Berücksichtigung mindestens eines Risikoergänzungspotentials (23) erfolgt, sodass zusätzliche Informationen über das Umfeld (10) in die Risikopotentialfeldkarte (22) mit einfließen können,
wobei das Risikoergänzungspotential (23) als Gewichtungsfaktor der Zustandswahrscheinlichkeitsverteilung oder als orts- oder bereichsabhängige Konstante beim Erstellen der Risikopotentialfeldkarte (22) berücksichtigt wird, wobei die Risikopotentialfeldkarte (22) eine Karte des Umfeldes (10) ist, in der an jeder Position der Karte ein Risikowert hinterlegt ist, der angibt, wie wahrscheinlich das Antreffen eines anderen Objektes (60) dort ist;
wobei die Schätzeinrichtung (3) ferner derart ausgebildet ist, die Risikopotentialfeldkarten (22) des Umfeldes (10) für den aktuellen und den mindestens einen zukünftigen Zeitpunkt zu einer Risikopotentialfeldkartensequenz (24) zusammenzufassen, und
eine Ausgabeeinrichtung (4), wobei die Ausgabeeinrichtung (4) derart ausgebildet ist, die Risikopotentialfeldkartensequenz (24) als Umfeldabbild auszugeben.

10. Kraftfahrzeug (50), umfassend eine Vorrichtung (1) gemäß Anspruch 9.

## Claims

1. Method for providing an environment image of an environment (10) of a mobile device (30), comprising the following steps:
receiving and/or recording environment data (20) using an input device (2), wherein the environment data (20) represent the environment (10) and include information about static objects and/or dynamic objects (60) in the environment (10),
performing the following steps for a current and for at least one future point in time using an estimating device (3):
(a) estimating a state probability distribution (21) for at least one of the static objects and/or dynamic objects (60) on the basis of the received and/or recorded environment data (20),
(b) creating a risk potential field map (22) of the environment (10) on the basis of the estimated state probability distribution (21) of the at least one static object and/or dynamic object (60), taking into account at least one risk supplement potential (23) so that additional information about the environment (10) can be included in the risk potential field map (22), wherein the risk supplement potential (23) is taken into account as a weighting factor of the state probability distribution or as a location- or region-dependent constant when creating the risk potential field map (22),
wherein the risk potential field map (22) is a map of the environment (10) in which a risk value is stored at each position of the map, indicating how likely it is that another object (60) will be found there;
combining the risk potential field maps (22) of the environment (10) for the current point in time and the at least one future point in time into a risk potential field map sequence (24), and
outputting the risk potential field map sequence (24) as an environment image using an output device (4).

2. Method according to claim 1, **characterized in that** when estimating the state probability distribution (21), degrees of freedom (25) of the at least one static object and/or dynamic object (60) are taken into account.

3. Method according to claim 1 or 2, **characterized in that** information on intent (26) of at least one static object and/or dynamic object (60) depicted in the environment data (20) is determined from the received and/or recorded environment data (20), the estimation of the state probability distribution (21) for the at least one static object and/or dynamic object (60) being additionally carried out on the basis of the particular determined information on intent (26).

4. Method according to any of the preceding claims, **characterized in that** the risk potential field map sequence (24) is output as a film sequence consisting of individual images.

5. Method according to any of claims 1 to 3, **characterized in that** the risk potential field map sequence (24) is output as a set of individual grid elements, each associated with time-dependent functions.

6. Method according to any of the preceding claims, **characterized in that** a road graph (27) is taken into account when estimating the state probability distribution (21).

7. Method according to any of the preceding claims, **characterized in that** hidden regions (12) are identified in the environment data (20) of static objects and/or dynamic objects (60) and at least one risk supplement potential (23) is assigned to each of these identified hidden regions (12).

8. Method according to any of the preceding claims, **characterized in that** on the basis of at least one of the risk potential field maps (22) or the risk potential field map sequence (24), a recommendation for action (28) for the mobile device (28) is derived by means of a recommendation device (5) and output using the output device (4).

9. Apparatus (1) for providing an environment image of an environment (10) of a mobile device (30), comprising:
an input device (2), wherein the input device (2) is configured to receive and/or record environment data (20), wherein the environment data (20) represent the environment (10) and include information about static objects and/or dynamic objects (60) in the environment (10),
an estimating device (3), wherein the estimating device (3) is configured to perform the following steps for a current and for at least one future point in time:
(a) estimating a state probability distribution (21) for at least one of the static objects and/or dynamic objects (60) on the basis of the received and/or recorded environment data (20),
(b) creating a risk potential field map (22) of the environment (10) on the basis of the estimated state probability distribution (21) of the at least one static object and/or dynamic object (60), taking into account at least one risk supplement potential (23) so that additional information about the environment (10) can be included in the risk potential field map (22),
wherein the risk supplement potential (23) is taken into account as a weighting factor of the state probability distribution or as a location- or region-dependent constant when creating the risk potential field map (22), wherein the risk potential field map (22) is a map of the environment (10) in which a risk value is stored at each position of the map, indicating how likely it is that another object (60) will be found there;
wherein the estimating device (3) is further configured to combine the risk potential field maps (22) of the environment (10) for the current and the at least one future point in time into a risk potential field map sequence (24), and
an output device (4), wherein the output device (4) is configured to output the risk potential field map sequence (24) as an environment image.

10. Motor vehicle (50) comprising an apparatus (1) according to claim 9.

## Revendications

1. Procédé permettant de fournir une image d'environnement d'un environnement (10) d'un appareil mobile (30), comprenant les étapes suivantes : réception et/ou acquisition de données d'environnement (20) par le biais d'un appareil d'entrée (2), dans lequel les données d'environnement (20) représentent l'environnement (10) et comprennent des informations concernant des objets statiques et/ou des objets dynamiques (60) dans l'environnement (10),
exécution des étapes suivantes pour un moment actuel et pour au moins un moment futur par le biais d'un appareil d'estimation (3) :
(a) estimation d'une répartition de probabilité d'état (21) pour au moins l'un des objets statiques et/ou des objets dynamiques (60) sur la base des données d'environnement (20) reçues et/ou acquises,
(b) création d'une carte de champ de potentiel de risque (22) de l'environnement (10) sur la base de la répartition de probabilité d'état (21) estimée de l'au moins un objet statique et/ou objet dynamique (60), dans lequel cela s'effectue en tenant compte d'au moins un potentiel de complément de risque (23), de sorte que des informations supplémentaires concernant l'environnement (10) peuvent être intégrées dans la carte de champ de potentiel de risque (22), dans lequel le potentiel de complément de risque (23) est pris en compte comme facteur de pondération de la répartition de probabilité d'état ou comme constante dépendant du lieu ou de la zone lors de la création de la carte de champ de potentiel de risque (22), dans lequel la carte de champ de potentiel de risque (22) est une carte de l'environnement (10) dans laquelle est déposée au niveau de chaque position de la carte une valeur de risque qui indique la probabilité d'y rencontrer un autre objet (60) ;
regroupement des cartes de champ de potentiel de risque (22) de l'environnement (10) pour le moment actuel et l'au moins un moment futur en une séquence de cartes de champ de potentiel de risque (24), et
affichage de la séquence de cartes de champ de potentiel de risque (24) en tant qu'image d'environnement par le biais d'un dispositif d'affichage (4).

2. Procédé selon la revendication 1, **caractérisé en ce que** lors de l'estimation de la répartition de probabilité d'état (21), des degrés de liberté (25) de l'au moins un objet statique et/ou objet dynamique (60) sont pris en compte.

3. Procédé selon la revendication 1 ou 2, **caractérisé en ce qu'**une information d'intention (26) d'au moins un objet statique et/ou objet dynamique (60) représenté dans les données d'environnement (20) est déterminée à partir des données d'environnement (20) reçues et/ou acquises, dans lequel l'estimation de la répartition de probabilité d'état (21) pour l'au moins un objet statique et/ou objet dynamique (60) s'effectue en outre sur la base de l'information d'intention (26) respectivement déterminée.

4. Procédé selon l'une des revendications précédentes,
**caractérisé en ce que** la séquence de cartes de champ de potentiel de risque (24) est émise sous la forme d'une séquence de film constituée d'images individuelles.

5. Procédé selon l'une des revendications 1 à 3, **caractérisé en ce que** la séquence de cartes de champ de potentiel de risque (24) est émise sous la forme d'un ensemble de fonctions dépendant du temps, respectivement associées à des éléments de trame individuels.

6. Procédé selon l'une des revendications précédentes,
**caractérisé en ce que** lors de l'estimation de la répartition de probabilité d'état (21), un graphique de rues (27) est pris en compte.

7. Procédé selon l'une des revendications précédentes,
**caractérisé en ce que** des zones cachées (12) sont identifiées dans les données d'environnement (20) d'objets statiques et/ou d'objets dynamiques (60) et respectivement au moins un potentiel de complément de risque (23) est associé à ces zones cachées (12) identifiées.

8. Procédé selon l'une des revendications précédentes,
**caractérisé en ce que** sur la base d'au moins l'une des cartes de champ de potentiel de risque (22) ou de la séquence de cartes de champ de potentiel de risque (24), une recommandation d'action (28) pour l'appareil mobile (28) est déduite par le biais d'un appareil de recommandation (5) et émise par le biais du dispositif d'affichage (4).

9. Dispositif (1) permettant de fournir une image d'environnement d'un environnement (10) d'un appareil mobile (30), comprenant :
un appareil d'entrée (2), dans lequel l'appareil d'entrée (2) est conçu de manière à recevoir et/ou à acquérir des données d'environnement (20), dans lequel les données d'environnement (20) représentent l'environnement (10) et comprennent des informations concernant des objets statiques et/ou des objets dynamiques (60) dans l'environnement (10),
un appareil d'estimation (3), dans lequel l'appareil d'estimation (3) est conçu pour exécuter les étapes suivantes pour un moment actuel et pour au moins un moment futur :
(a) estimation d'une répartition de probabilité d'état (21) pour au moins l'un des objets statiques et/ou des objets dynamiques (60) sur la base des données d'environnement (20) reçues et/ou acquises,
(b) création d'une carte de champ de potentiel de risque (22) de l'environnement (10) sur la base de la répartition de probabilité d'état (21) estimée de l'au moins un objet statique et/ou objet dynamique (60), dans lequel cela s'effectue en tenant compte d'au moins un potentiel de complément de risque (23), de sorte que des informations supplémentaires concernant l'environnement (10) peuvent être intégrées dans la carte de champ de potentiel de risque (22),
dans lequel le potentiel de complément de risque (23) est pris en compte comme facteur de pondération de la répartition de probabilité d'état ou comme constante dépendant du lieu ou de la zone lors de la création de la carte de champ de potentiel de risque (22), dans lequel la carte de champ de potentiel de risque (22) est une carte de l'environnement (10) dans laquelle est déposée au niveau de chaque position de la carte une valeur de risque qui indique la probabilité d'y rencontrer un autre objet (60) ;
dans lequel l'appareil d'estimation (3) est en outre conçu pour regrouper les cartes de champ de potentiel de risque (22) de l'environnement (10) pour le moment actuel et l'au moins un moment futur en une séquence de cartes de champ de potentiel de risque (24), et
un dispositif d'affichage (4), dans lequel dispositif d'affichage (4) est conçu pour émettre la séquence de cartes de champ de potentiel de risque (24) sous la forme d'une image d'environnement.

10. Véhicule automobile (50), comprenant un dispositif (1) selon la revendication 9.
